# FASCICULE DE BREVET EUROPEEN

(11) **EP 3 560 079 B1**
(45) Date de publication et mention de la délivrance du brevet: **27.04.2022**
(21) Numéro de dépôt: 17829235.5
(22) Date de dépôt: 18.12.2017
(51) Int. Cl.: H02K 5/20, H02K 9/193, H02K 11/04, H02K 11/05

(54) **MACHINE ÉLECTRIQUE TOURNANTE MUNIE D'UN ISOLANT ÉLECTRIQUE ENTRE UN DISSIPATEUR THERMIQUE ET UN PALIER**
ROTIERENDE ELEKTRISCHE MASCHINE MIT EINER ELEKTRISCHEN ISOLIERUNG ZWISCHEN EINEM KÜHLKÖRPER UND EINEM LAGER
ROTATING ELECTRICAL MACHINE PROVIDED WITH AN ELECTRICAL INSULATOR BETWEEN A HEAT SINK AND A BEARING

(30) Priorité: 20.12.2016 FR 1662907
(43) Date de publication de la demande: 30.10.2019
(73) Titulaire: Valeo Equipements Electriques Moteur, 94046 Créteil Cedex (FR)
(72) Inventeur: ROUIS, Oussama, 94046 Créteil (FR); LABROSSE, Jean-Claude, 94046 Créteil (FR); LEDIEU, Cédric, 94046 Créteil (FR)
(74) Mandataire: Valeo Powertrain Systems
(86) Numéro de dépôt international: PCT/FR2017/053647
(87) Numéro de publication internationale: WO 2018/115679

(56) Documents cités:
- WO-A1-2016/173812
- DE-A1- 2 145 126
- DE-A1-102013 100 166
- FR-A1- 2 711 283
- FR-A1- 2 938 131
- FR-A1- 3 036 552

## Description

La présente invention porte sur une machine électrique tournante munie d'un isolant électrique entre un dissipateur thermique et un palier. L'invention trouve une application particulièrement avantageuse, mais non exclusive, avec les machines électriques réversibles de forte puissance pouvant fonctionner en mode alternateur et en mode moteur accouplées avec un élément tel qu'un réducteur de boîte de vitesses.

De façon connue en soi, les machines électriques tournantes comportent un stator et un rotor solidaire d'un arbre. Le stator est monté dans un carter configuré pour porter à rotation l'arbre sur des paliers par l'intermédiaire de roulements.

Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande.

Dans certains types de chaînes de traction de véhicule automobile assurant la transmission de la puissance mécanique du moteur thermique vers les roues du véhicule, une machine électrique tournante réversible de forte puissance est accouplée à la boîte de vitesses du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique.

Dans certaines configurations, il peut exister un problème de gestion des potentiels de masse électrique de l'électronique de commande et du stator. En effet, le potentiel de masse de l'électronique de commande fonctionnant à une tension donnée, par exemple de l'ordre de 12V, peut être perturbé par le potentiel de masse du stator de la machine électrique fonctionnant à une tension plus élevée, par exemple de l'ordre de 48V.

Il est connu de la demande DE 10 2013 100 166 de disposer un isolant électrique entre un dissipateur thermique associé à un module électrique de commande et un palier de machine électrique tournante.

La présente invention vise à remédier efficacement à cet inconvénient en proposant une machine électrique tournante, notamment pour véhicule automobile, comportant:
- un module électrique de commande de la machine électrique tournante,
- un dissipateur thermique associé au module électrique de commande,
- un palier agencé pour supporter un roulement portant à rotation un arbre de la machine électrique tournante, ladite machine électrique tournante comportant un isolant électrique interposé axialement entre le palier et le dissipateur thermique, ledit isolant électrique étant agencé pour isoler électriquement le dissipateur thermique par rapport au palier.

L'invention permet ainsi d'assurer une isolation électrique entre le module électrique de commande et les parties actives de la machine électrique qui ne partagent pas le même potentiel électrique de masse.

Selon une réalisation, l'isolant électrique est constitué par un joint plat. Selon une réalisation, l'isolant électrique recouvre au moins 80% d'une surface de contact entre le dissipateur thermique et le palier.

Selon une réalisation, l'isolant électrique suit un pourtour externe du dissipateur thermique. Cela permet d'isoler la totalité de la surface de contact entre le dissipateur thermique et le palier.

Ladite machine électrique tournante comporte une chambre de refroidissement agencée pour permettre la circulation d'un liquide de refroidissement pour le refroidissement du dissipateur thermique.

La chambre de refroidissement est délimitée par une face d'extrémité axiale du dissipateur thermique et une face en regard de l'isolant électrique. L'isolant forme ainsi également un joint d'étanchéité pour la chambre de refroidissement. Cela permet également de réduire l'encombrement axial de la machine électrique par suppression d'une paroi de la chambre de refroidissement dans le cas où cette dernière est réalisée à l'intérieur du dissipateur thermique.

Selon une réalisation, l'isolant électrique comporte un trou traversant entourant un canal agencé pour le passage du liquide de la chambre de refroidissement vers l'intérieur de la machine électrique ou vers une deuxième chambre de refroidissement pour le refroidissement du stator.

Selon une réalisation, la chambre de refroidissement comporte au moins une ouverture pour permettre le passage du liquide de refroidissement à l'intérieur d'un volume interne de la machine électrique tournante. Cela permet ainsi d'améliorer les performances de refroidissement en autorisant un arrosage direct des parties actives via les ouvertures réalisées dans la chambre de refroidissement.

Selon une réalisation, l'ouverture débouche dans une buse montée avec un jeu dans une extrémité d'un alésage de l'arbre, l'arbre étant muni de trous pour l'arrosage du stator.

Selon une réalisation, la chambre de refroidissement comporte une pluralité d'ouvertures débouchant en vis-à-vis d'une face d'extrémité axiale d'un stator pour le refroidissement d'un bobinage du stator.

L'arbre pourra comporter une extrémité cannelée. Cela permet d'adapter l'interface de liaison mécanique de la machine électrique avec un élément extérieur (pignon ou courroie) en adaptant le type de manchon qui comporte des cannelures ménagées en périphérie interne pour coopération avec l'extrémité cannelée de l'arbre. En effet, ce manchon pourra comporter en périphérie externe des dentures pour engrènement avec un pignon ou une poulie pour coopération avec une courroie correspondante. Le choix de la configuration du manchon dépend de l'application et en particulier de la configuration de l'élément avec lequel coopère la machine.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'une machine électrique tournante selon la présente invention;
La figure 2 est une vue en coupe longitudinale de la machine électrique tournante selon l'invention accouplée avec un réducteur de vitesse;
La figure 3 est une vue en perspective montrant le stator et l'interconnecteur de la machine électrique tournante selon l'invention;
La figure 4 est une vue en perspective de la partie arrière de la machine électrique tournante selon la présente invention;
La figure 5 est une vue en coupe longitudinale de la partie arrière de la machine électrique tournante selon la présente invention;
Les figures 6a à 6c est des vues en perspective illustrant les étapes de montage du joint selon la présente invention;
Les figures 7a et 7b sont des vues en perspective du dissipateur thermique illustrant des modes de réalisation de l'invention dans lesquels la chambre de refroidissement vue par transparence présente au moins une ouverture de liquide vers le volume interne de la machine électrique tournante.

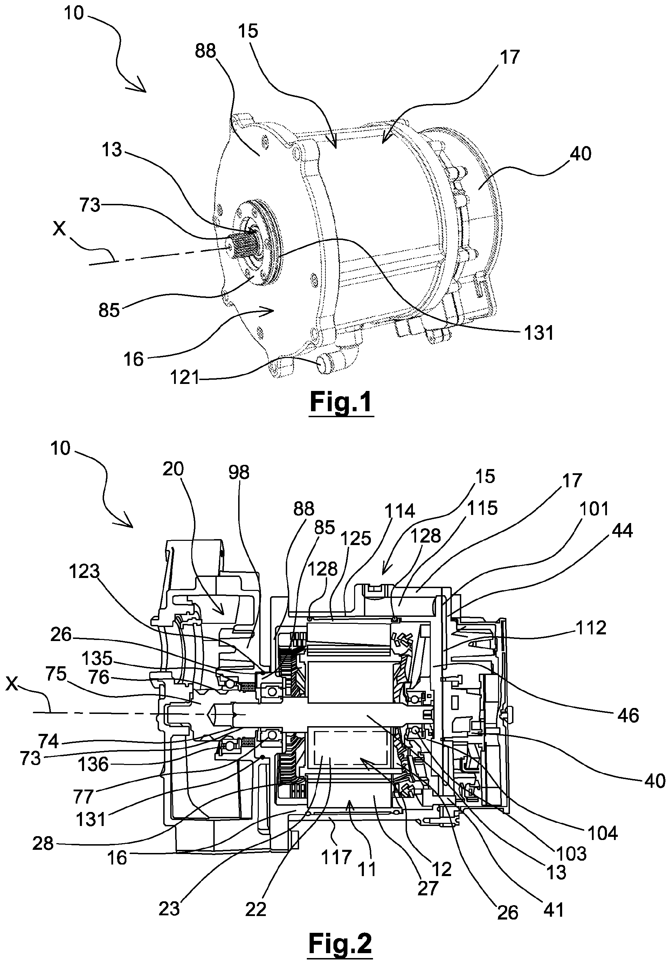

Les éléments identiques, similaires, ou analogues, conservent la même référence d'une figure à l'autre. Dans la suite de la description, on considère une orientation d'avant en arrière, une orientation allant de gauche à droite sur la figure 2. Ainsi, on entend par un élément "avant", un élément situé du côté de l'extrémité cannelée 73 de l'arbre de la machine et par élément "arrière" un élément situé du côté opposé, c'est-à-dire du côté du module électrique de commande 40.

Les figures 1 et 2 montrent une machine électrique tournante 10 comportant un stator 11 polyphasé entourant un rotor 12 monté sur un arbre 13 d'axe X correspondant à l'axe de la machine électrique. Le stator 11 entoure le rotor 12 avec présence d'un entrefer entre la périphérie interne du stator 11 et la périphérie externe du rotor 12. Le stator 11 est monté dans un carter 15 muni d'un palier avant 16 et d'un palier arrière 17.

Cette machine électrique 10 est destinée à être accouplée à un réducteur 20 de boîte de vitesses visible en figure 2. La machine est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine pourra par exemple être comprise entre 15kW et 50kW.

Plus précisément, le rotor 12 comporte un corps 22 sous la forme d'un paquet de tôles. Des aimants permanents 23 sont implantés dans des cavités du corps 22. Les aimants 23 pourront être en terre rare ou en ferrite selon les applications et la puissance recherchée de la machine. En outre, le rotor 12 comporte deux flasques 26 plaqués chacun contre une face d'extrémité axiale du rotor 12. Ces flasques 26 assurent une retenue axiale des aimants 23 et servent également à équilibrer le rotor 12.

Par ailleurs, le stator 11 comporte un corps 27 constitué par un paquet de tôles ainsi qu'un bobinage 28. Le corps 27 est formé par un empilement de feuilles de tôles maintenues sous forme de paquet au moyen d'un système de fixation adapté.

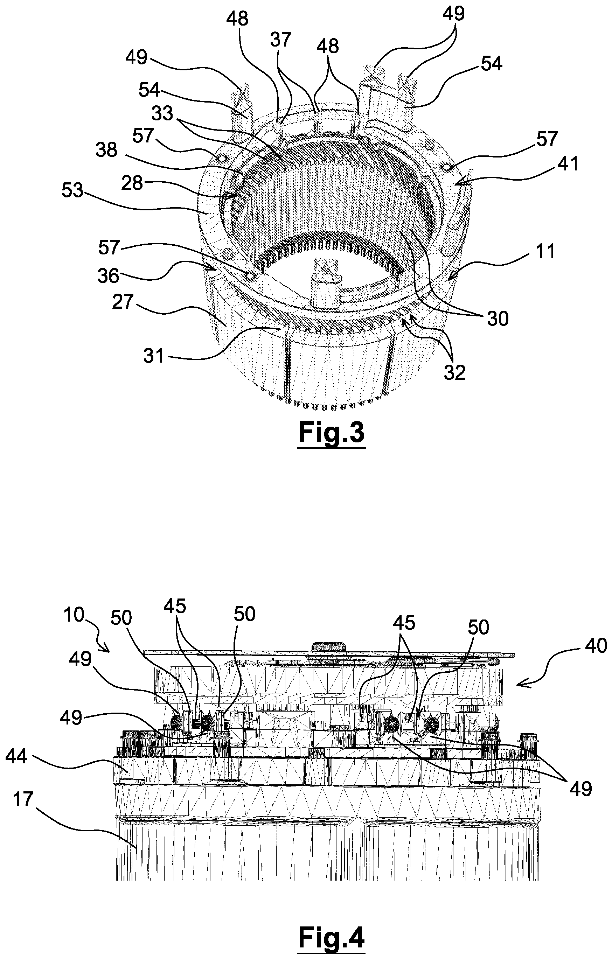

Le corps de stator 27 montré sur la figure 3 est muni de dents 30 s'étendant depuis une périphérie interne d'une culasse annulaire 31 et délimitant deux à deux des encoches 32 pour le montage du bobinage 28 du stator 11. Ainsi, deux encoches 32 successives sont séparées par une dent 30. Les encoches 32 débouchent axialement dans les faces d'extrémité axiale et radialement vers l'intérieur du corps de stator 27.

Le bobinage 28 comporte un ensemble d'enroulements de phase 33 traversant les encoches 32 et formant des chignons 36 s'étendant en saillie de part et d'autre du corps de stator 27. Les enroulements de phase 33 sont obtenus ici à partir d'éléments conducteurs en forme d'épingles reliés entre eux par exemple par soudage. Ces enroulements 33 sont par exemple des enroulements doubles triphasés connectés en étoile.

A cette fin, une extrémité des enroulements de phase 33 est reliée au point neutre au moyen de barres de neutre 38 assurant une liaison entre les points neutre des différents enroulements de phase 33. Les autres extrémités 37 de ces enroulements 33, dites sorties de phase, sont destinées à être reliées à un module électrique de commande 40 via un interconnecteur 41.

Comme on peut le voir sur la figure 4, le module électrique de commande 40 comporte un dissipateur thermique 44 sur lequel sont fixés notamment des modules de puissance 45, par exemple par vissage. Ces modules de puissance 45 intègrent de façon connue en soi des interrupteurs, prenant par exemple la forme de transistors de type MOS, permettant d'assurer une commande de la machine électrique tournante 10 en mode moteur ou en mode alternateur. Le module électrique de commande 40 est monté plaqué, via le dissipateur thermique 44, contre la face arrière de la paroi transversale 46 du palier arrière 17.

A cet effet, comme montré sur la figure 3, l'interconnecteur 41, ici de forme globalement annulaire, comporte des bornes 48 destinées à être reliées aux sorties de phase 37 et des terminaux de connexion 49 destinés à être connectés électriquement à des pattes 50 des modules de puissance 45. L'interconnecteur 41 permet ainsi d'établir une correspondance entre les sorties de phase 37 et les pattes 50 des modules de puissance 45 qui sont décalées angulairement par rapport aux sorties de phase 37.

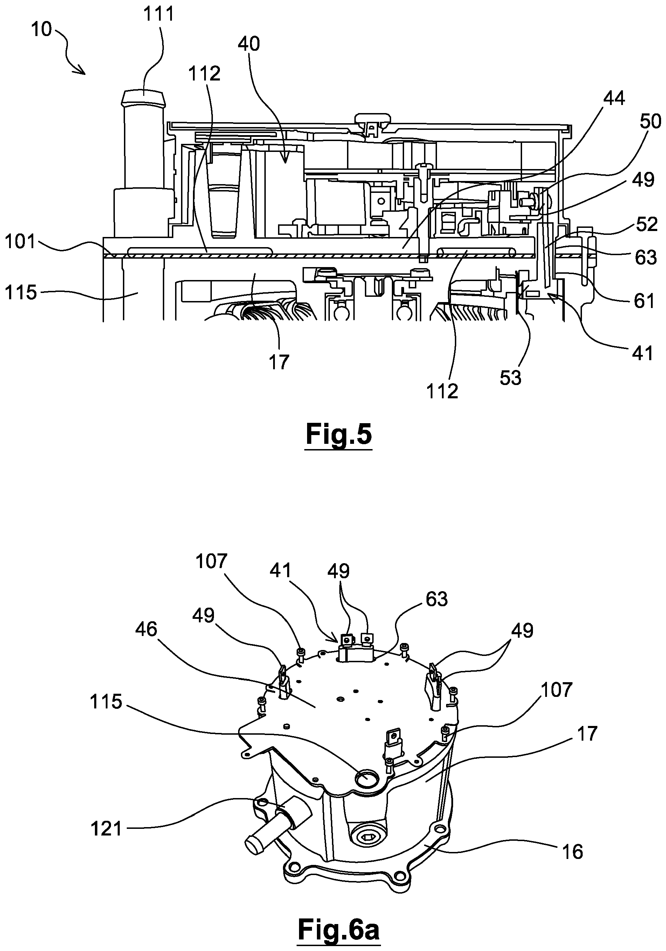

A cet effet, les bornes 48 sont reliées électriquement aux terminaux de connexion 49 via des traces 52 (cf. figure 5) sur lesquelles est surmoulé un corps 53 réalisé dans un matériau isolant, tel que du plastique. Les parties surmoulées 54 desquelles sont issues les terminaux de connexion 49 s'étendent en saillie axiale par rapport la portion annulaire de l'interconnecteur 41.

L'interconnecteur 41 est fixé à la face avant de la paroi transversale 46 du palier arrière 17 au moyen d'insert 57 destinés à recevoir des organes de fixation correspondants, par exemple des vis. L'interconnecteur 41 est ainsi positionné à distance du corps de stator 11, ce qui limite grandement son échauffement.

Par ailleurs, afin de permettre le positionnement des terminaux 49 de l'interconnecteur 41 en face des pattes 50 des modules de puissance 45, le palier arrière 17 comporte des ouvertures 61 ménagées dans sa paroi transversale 46 pour le passage des terminaux de connexion 49, tel que cela est montré sur la figure 5. Ces ouvertures 61 sont positionnées en regard d'ouvertures 63 correspondantes ménagées dans le dissipateur thermique 44 du module électrique de commande 40.

Comme on peut le voir sur la figure 2, la machine électrique 10 est configurée, de sorte qu'une extrémité cannelée 73 de l'arbre 13 viennent en prise avec une périphérie interne cannelée 74 de forme correspondante d'un manchon 75. Cela permet ainsi de lier en rotation l'arbre 13 avec le manchon 75. Le manchon 75 pourra également comporter une denture hélicoïdale 76 ménagée dans sa périphérie externe destinée à coopérer avec les dents d'un pignon correspondant du réducteur 20.

Afin d'assurer un montage à rotation de l'arbre 13 par rapport au palier avant 16, un roulement 77 est intercalé radialement entre l'arbre 13 de la machine électrique 10 et la périphérie interne d'un nez saillant 85 issu de la paroi transversale 88 du palier avant 16. Le roulement 77 pourra être par exemple un roulement à billes ou à aiguilles. Par ailleurs, comme cela est illustré par la figure 2, le roulement arrière 103 est monté dans un logement 104 correspondant du palier arrière 17.

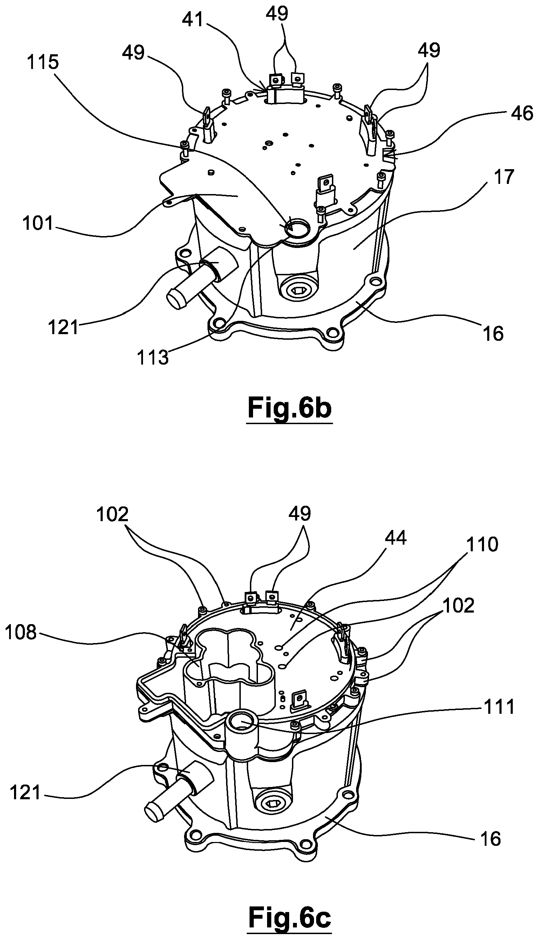

Par ailleurs, comme on peut le voir sur la figure 5, un isolant électrique 101 est interposé axialement entre le palier arrière 17 et le dissipateur thermique 44. Cet isolant électrique 101 est agencé pour isoler électriquement le dissipateur thermique 44 par rapport au palier 17. Comme on peut le voir sur la figure 6b, l'isolant électrique 101 est constitué par un joint plat qui recouvre au moins 80% de la surface de contact entre le dissipateur thermique 44 et le palier. De préférence, l'isolant électrique 101 suit le pourtour externe du dissipateur thermique 44 au niveau de l'interface avec le palier 17.

Comme cela est illustré par les figures 6a à 6c, une fois que le joint plat 101 est monté plaqué contre la face arrière de la paroi transversale 46 du palier 17, le dissipateur thermique 44 est fixé sur le palier arrière 17 pour former la chambre 112. Cette fixation entre ces deux éléments pourra être réalisée au moyen d'organes de fixation, tels que des vis, traversant des oreilles trouées 102 dépassant radialement du dissipateur thermique 44 et destinées à coopérer avec des trous taraudés 107 correspondants ménagés en périphérie externe du palier arrière 17 (cf. figure 6a).

Le dissipateur thermique 44 pourra comporter une cheminée 108 issue de sa paroi transversale dans laquelle sont montés des condensateurs du module électrique de commande, tel que cela est montré sur la figure 6c. Le dissipateur thermique 44 comporte également des trous 110 pour la fixation des composants du module électrique de commande 40, notamment les composants de puissance.

Par ailleurs, comme on peut le voir notamment sur la figure 5, une chambre de refroidissement 112 est agencée pour permettre la circulation d'un liquide de refroidissement, tel que qu'un liquide à base d'eau ou d'huile, pour le refroidissement du dissipateur thermique 44. La chambre 112 est alimentée en liquide de refroidissement via une entrée 111 ménagée dans le dissipateur thermique 44. La chambre de refroidissement 112 est délimitée par une face d'extrémité axiale du dissipateur thermique 44 réalisée dans une zone creusée du dissipateur thermique 44 et une face en regard de l'isolant électrique 101 L'isolant 101 forme ainsi également un joint d'étanchéité pour la chambre de refroidissement.

L'isolant électrique 101 comporte un trou traversant 113 visible en figure 6b entourant un canal 115 agencé pour le passage du liquide de la chambre de refroidissement 112 vers une deuxième chambre de refroidissement 114 pour le refroidissement du stator 11. A cet effet, le canal 115 débouche d'une part dans la chambre 112 du dissipateur 44 et d'autre part dans la chambre 114 définie par les paliers avant 16 et arrière 17.

Plus précisément, comme on peut le voir sur la figure 2, la chambre de refroidissement 114 est délimitée par la périphérie externe de la paroi latérale 125 du palier avant 16 et la périphérie interne de la paroi latérale 117 du palier arrière 17. Cette chambre de refroidissement 114 est fermée à ses extrémités axiales par deux joints 128 de type torique. Le stator 11 est monté fretté à l'intérieur du palier avant 16 de manière à établir un contact intime entre la périphérie externe du corps de stator 11 et la périphérie interne de la paroi latérale du palier avant 16.

Le canal 115 est réalisé dans la paroi latérale 117 du palier arrière 17, c'est-à-dire que les parois délimitant le canal 115 sont monobloc avec la paroi latérale 117 du palier arrière 17. Le canal 115 pourra par exemple être obtenu par moulage ou par usinage de la paroi latérale 117 du palier arrière 17.

Après avoir circulé dans la chambre 114 qui s'étend autour du stator 11 pour assurer son refroidissement sur environ 360 degrés, le liquide est évacué via une sortie de liquide 121 visible sur la figure 1 et les figures 6a-6c.

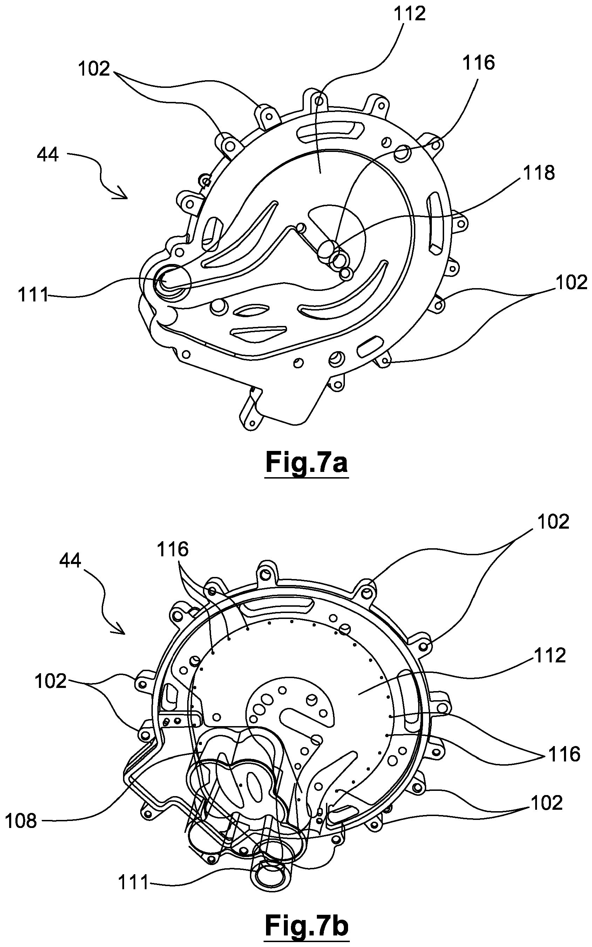

En variante, comme cela est illustré par les figures 7a et 7b, la chambre 112 pourra être intégrée dans le dissipateur thermique 44, c'est-à-dire que la chambre 112 pourra être réalisée lors du moulage ou de l'usinage du dissipateur thermique 44 pour définir un volume creux à l'intérieur du dissipateur thermique 44. La chambre 112 est ainsi délimitée par des faces internes du dissipateur 44.

La chambre de refroidissement 112 pourra en outre comporter au moins une ouverture 116 pour permettre le passage du liquide de refroidissement à l'intérieur du volume interne de la machine délimité par les paliers 16 et 17. Cela permet ainsi d'améliorer les performances de refroidissement en autorisant un arrosage direct des parties actives via les ouvertures réalisées dans la chambre de refroidissement.

Dans le mode de réalisation de la figure 7a, l'ouverture 116 débouche dans une buse 118 montée avec un jeu dans une extrémité d'un alésage de l'arbre 13. L'arbre 13 est muni de trous pour l'arrosage du stator 11. Le joint 101 présente alors une ouverture correspondante pour le passage de la buse 118. La buse 118 pourra être monobloc avec le dissipateur thermique 44 ou rapporté à fixation sur le dissipateur thermique 44.

Dans le mode de réalisation de la figure 7b, la chambre de refroidissement 112 comporte une pluralité d'ouvertures 116 débouchant en vis-à-vis d'une face d'extrémité axiale du stator 11 pour le refroidissement du bobinage 28. Afin d'assurer l'étanchéité de la machine électrique 10, un joint 131 visible en figures 1 et 2 est porté par une périphérie externe du nez 85 pour empêcher des particules ou du liquide de pénétrer dans la machine via le roulement 77. Ce joint 131 est radialement disposé entre la périphérie externe du nez 85 et la périphérie interne du logement 123 correspondant ménagé dans le carter 98 du réducteur 20.

En outre, un joint 135, par exemple de type triple lèvre, pourra également être positionné radialement entre une périphérie externe du manchon 75 et une face du carter 98 délimitant une ouverture pour le passage du manchon 75, tel que montré sur la figure 2. Le joint 135 est positionné axialement entre le roulement 136 assurant le guidage en rotation du manchon 75 par rapport au carter 98 du réducteur 20 et le roulement avant 77 de la machine électrique tournante 10.

Bien entendu, la description qui précède a été donnée à titre d'exemple uniquement et ne limite pas le domaine de l'invention dont on ne sortirait pas en remplaçant les différents éléments par tous autres équivalents.

L'invention est définie dans les revendications suivantes.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante (10), notamment pour véhicule automobile, comportant:
- un module électrique de commande (40) de la machine électrique tournante,
- un dissipateur thermique (44) associé au module électrique de commande (40),
- un palier (17) agencé pour supporter un roulement (103) portant à rotation un arbre (13) de la machine électrique tournante,
- un isolant électrique (101) interposé axialement entre le palier (17) et le dissipateur thermique (44), ledit isolant électrique (101) étant agencé pour isoler électriquement le dissipateur thermique (44) par rapport au palier (17), et
- une chambre de refroidissement (112) agencée pour permettre la circulation d'un liquide de refroidissement pour le refroidissement du dissipateur thermique (44),
**caractérisée en ce que** la chambre de refroidissement (112) est délimitée par une face d'extrémité axiale du dissipateur thermique (44) et une face en regard de l'isolant électrique (101), formant ainsi également un joint d'étanchéité pour la chambre de refroidissement (112).

2. Machine électrique tournante selon la revendication 1, **caractérisée en ce que** l'isolant électrique (101) est constitué par un joint plat.

3. Machine électrique tournante selon la revendication 1 ou 2, **caractérisée en ce que** l'isolant électrique (101) recouvre au moins 80% d'une surface de contact entre le dissipateur thermique (44) et le palier (17).

4. Machine électrique tournante selon l'une quelconque des revendications 1 à 3, **caractérisée en ce que** l'isolant électrique (101) suit un pourtour externe du dissipateur thermique (44).

5. Machine électrique tournante selon l'une quelconque des revendications précédentes, **caractérisée en ce que** l'isolant électrique (101) comporte un trou traversant (113) entourant un canal (115) agencé pour le passage du liquide de la chambre de refroidissement (112) vers l'intérieur de la machine électrique ou vers une deuxième chambre de refroidissement (114) pour le refroidissement du stator (11).

6. Machine électrique tournante selon l'une quelconque des revendications 1 à 5, **caractérisée en ce que** la chambre de refroidissement (112) comporte au moins une ouverture (116) pour permettre le passage du liquide de refroidissement à l'intérieur d'un volume interne de la machine électrique tournante (10).

7. Machine électrique tournante selon la revendication 6, **caractérisée en ce que** l'ouverture (116) débouche dans une buse (118) montée avec un jeu dans une extrémité d'un alésage de l'arbre (13), l'arbre (13) étant muni de trous pour l'arrosage du stator (11).

8. Machine électrique tournante selon la revendication 6, **caractérisée en ce que** la chambre de refroidissement (112) comporte une pluralité d'ouvertures (112) débouchant en vis-à-vis d'une face d'extrémité axiale d'un stator (11) pour le refroidissement d'un bobinage (28) du stator (11).

## Patentansprüche

1. Rotierende elektrische Maschine (10), insbesondere für ein Kraftfahrzeug, die Folgendes umfasst:
- ein elektrisches Steuermodul (40) für die rotierende elektrische Maschine,
- einen Kühlkörper (44), der mit dem elektrischen Steuermodul (40) assoziiert ist,
- ein Lager (17), das dazu angeordnet ist, ein Wälzlager (103) aufzunehmen, das eine Welle (13) der rotierenden elektrischen Maschine drehbar trägt,
- eine elektrische Isolierung (101), die axial zwischen dem Lager (17) und dem Kühlkörper (44) angeordnet ist, wobei die elektrische Isolierung (101) dazu angeordnet ist, den Kühlkörper (44) mit Bezug auf das Lager (17) elektrisch zu isolieren, und
- eine Kühlkammer (112), die dazu angeordnet ist, die Zirkulation einer Kühlflüssigkeit zur Kühlung des Kühlkörpers (44) zu ermöglichen,
**dadurch gekennzeichnet, dass** die Kühlkammer (112) durch eine axiale Stirnseite des Kühlkörpers (44) und eine der elektrischen Isolierung (101) zugewandte Seite begrenzt wird, die so gleichzeitig eine Dichtung für die Kühlkammer (112) bildet.

2. Rotierende elektrische Maschine nach Anspruch 1, **dadurch gekennzeichnet, dass** die elektrische Isolierung (101) aus einer Flachdichtung besteht.

3. Rotierende elektrische Maschine nach Anspruch 1 oder 2, **dadurch gekennzeichnet, dass** die elektrische Isolierung (101) mindestens 80 % einer Kontaktoberfläche zwischen dem Kühlkörper (44) und dem Lager (17) bedeckt.

4. Rotierende elektrische Maschine nach einem der Ansprüche 1 bis 3, **dadurch gekennzeichnet, dass** die elektrische Isolierung (101) einem Außenumfang des Kühlkörpers (44) folgt.

5. Rotierende elektrische Maschine nach einem der vorhergehenden Ansprüche, **dadurch gekennzeichnet, dass** die elektrische Isolierung (101) ein Durchgangsloch (113) umfasst, das einen Kanal (115) umgibt, der für den Durchgang der Flüssigkeit von der Kühlkammer (112) zum Inneren der elektrischen Maschine oder zu einer zweiten Kühlkammer (114) zur Kühlung des Stators (11) angeordnet ist.

6. Rotierende elektrische Maschine nach einem der Ansprüche 1 bis 5, **dadurch gekennzeichnet, dass** die Kühlkammer (112) mindestens eine Öffnung (116) umfasst, um den Durchgang der Kühlflüssigkeit ins Innere eines Innenraums der rotierenden elektrischen Maschine (10) zu ermöglichen.

7. Rotierende elektrische Maschine nach Anspruch 6, **dadurch gekennzeichnet, dass** die Öffnung (116) in einer Düse (118) mündet, die mit Spiel in einem Ende einer Bohrung der Welle (13) angebracht ist, wobei die Welle (13) über Löcher zum Besprühen des Stators (11) verfügt.

8. Rotierende elektrische Maschine nach Anspruch 6, **dadurch gekennzeichnet, dass** die Kühlkammer (112) eine Vielzahl von Öffnungen (112) umfasst, die gegenüber einer axialen Stirnseite eines Stators (11) münden, um eine Wicklung (28) des Stators (11) zu kühlen.

## Claims

1. Rotating electrical machine (10), notably for a motor vehicle, comprising:
- an electrical control module (40) of the rotating electrical machine,
- a heat sink (44) associated with the electrical control module (40),
- a bearing (17) arranged to support a rolling bearing (103) supporting the rotation of a shaft (13) of the rotating electrical machine,
- an electrical insulator (101) inserted axially between the bearing (17) and the heat sink (44), said electrical insulator (101) being arranged to electrically insulate the heat sink (44) from the bearing (17), and
- a cooling chamber (112) arranged to allow the circulation of a coolant for cooling the heat sink (44), **characterized in that** the cooling chamber (112) is delimited by an axial end face of the heat sink (44) and an opposite face of the electrical insulator (101), thus also forming a seal for the cooling chamber (112).

2. Rotating electrical machine according to Claim 1, **characterized in that** the electrical insulator (101) consists of a flat seal.

3. Rotating electrical machine according to Claim 1 or 2, **characterized in that** the electrical insulator (101) covers at least 80% of a contact surface between the heat sink (44) and the bearing (17).

4. Rotating electrical machine according to any one of Claims 1 to 3, **characterized in that** the electrical insulator (101) follows an outer perimeter of the heat sink (44).

5. Rotating electrical machine according to any one of the preceding claims, **characterized in that** the electrical insulator (101) comprises a through-hole (113) encircling a channel (115) arranged for the passage of the liquid from the cooling chamber (112) to the interior of the electrical machine or to a second cooling chamber (114) for cooling the stator (11).

6. Rotating electrical machine according to any one of Claims 1 to 5, **characterized in that** the cooling chamber (112) comprises at least one aperture (116) to allow the passage of the coolant inside an internal volume of the rotating electrical machine (10).

7. Rotating electrical machine according to Claim 6, **characterized in that** the aperture (116) emerges in a nozzle (118) mounted with play in an end of a bore of the shaft (13), the shaft (13) being provided with holes for sprinkling the stator (11).

8. Rotating electrical machine according to Claim 6, **characterized in that** the cooling chamber (112) comprises a plurality of apertures (112) emerging opposite an axial end face of a stator (11) for cooling a winding (28) of the stator (11).
